# FASCICULE DE BREVET EUROPEEN

(11) **EP 2 238 425 B1**
(45) Date de publication et mention de la délivrance du brevet: **22.06.2011**
(21) Numéro de dépôt: 08871985.1
(22) Date de dépôt: 29.12.2008
(51) Int. Cl.: G01M 3/32

(54) **PROCEDE ET DISPOSITIF DE CONTROLE D'INTEGRITE D'UNE POCHE SOUPLE NON POREUSE A SOUFFLET(S)**
VERFAHREN UND VORRICHTUNG ZUR ÜBERPRÜFUNG DER INTAKTHEIT EINES FLEXIBLEN PORENFREIEN BEUTELS MIT EINEM ODER MEHREREN BÄLGEN
METHOD AND DEVICE FOR CHECKING THE INTEGRITY OF A FLEXIBLE, NONPOROUS BAG WITH ONE OR MORE BELLOWS

(30) Priorité: 28.01.2008 FR 0800423
(43) Date de publication de la demande: 13.10.2010
(73) Titulaire: Sartorius Stedim Biotech S.A., 13781 Aubagne (FR)
(72) Inventeur: VOUTE, Nicolas, F-13780 Cuges Les Pins (FR); STERING, Magnus, F-78600 Le Mesnil Le Roi (FR); DAHLBERG, Martin, 37120 Bovenden (DE); LANGER, Hartmut, 37081 Göttingen (DE)
(74) Mandataire: Derambure, Christian
(86) Numéro de dépôt international: PCT/FR2008/052428
(87) Numéro de publication internationale: WO 2009/095572

(56) Documents cités:
- WO-A-91/16611
- US-A1- 2006 277 975
- ANONYMOUS: "ASTM F2095-07e1 Standard Test Methods for Pressure Decay Leak Test for Flexible Packages With and Without Restraining Plates" BOOK OF STANDARDS, vol. 15.10, 2007, XP008096350 cité dans la demande
- "Automated Package Tester BT-1000"[Online] 8 décembre 2006 (2006-12-08), XP002495726 Extrait de l'Internet: URL:http://www.rycobel.de/download/prospek te/3-32%20Package%20Tester%20BT-1000.pdf> [extrait le 2008-09-11]

## Description

L'invention concerne un procédé de contrôle d'intégrité d'une poche souple non poreuse à soufflet(s) afin de détecter l'existence de fuites, un dispositif de contrôle d'intégrité pour la mise en oeuvre de ce procédé. L'invention concerne également les poches contrôlées par ledit procédé ou au moyen dudit dispositif.

L'invention est tout spécialement destinée à des poches stériles à usage unique pour des fluides bio-pharmaceutiques. Dans ce cas, on peut être amené à placer dans les poches des produits de haute valeur ajoutée, pour lesquels il est essentiel que l'on soit certain que la poche soit intègre.

On connaît de longue date des poches souples et non poreuses dont les deux grandes parois sont directement réunies l'une à l'autre. De telles poches, une fois expansées restent relativement peu épaisses, ce qui justifie qu'on les appelle souvent poches « pillow », ou poches « 2D » (D signifiant dimensions).

Le document FR-A-2 781 202 décrit une poche ayant deux grandes parois et deux soufflets latéraux. Chaque soufflet comprend deux petites parois reliées l'une à l'autre par un pli interne et chaque petite paroi est reliée à la grande paroi adjacente par un pli externe. Une telle poche, une fois expansée, prend une forme tridimensionnelle (cylindrique, prismatique, parallélépipédique...) et peut avoir un volume de 50 litres, voire plus, ce qui justifie qu'on l'appelle poche 3D.

Dans nombre de domaines techniques, et tout spécialement dans le domaine de la santé, il est indispensable de s'assurer que les poches souples non poreuses fabriquées soient étanches, du moins présentent un degré d'étanchéité jugé satisfaisant. Cela s'impose d'autant plus dans le cas où la poche comporte, par suite de sa fabrication, des lignes de soudure qui peuvent constituer autant de sources de fuite.

Il existe plusieurs procédés de contrôle d'intégrité de telles poches.

La norme F 2095 - 01 de ASTM International dont le titre est « Standard Test Methods for Pressure Decay Leak Test for Nonporous Flexible Packages With and Without Restraining Plates » porte plus précisément sur le procédé dit à chute de pression.

Ce procédé est envisagé selon deux modes d'exécution possibles : avec plaques de limitation d'expansion ou sans de telles plaques.

Dans le mode d'exécution avec plaques de limitation d'expansion, on procède comme suit :
- dans une phase de préparation :
   - on dispose d'une poche à contrôler ayant au moins un port apte à être obturé ou connecté de façon étanche et amovible,
   - on dispose d'une source de gaz sous pression destiné à être introduit dans la poche via le port,
   - on dispose de moyens de mesure de la pression du gaz dans la poche via le port,
   - on dispose de deux plaques fixes de limitation d'expansion, écartées et en regard l'une de l'autre, aptes à ne pas occulter une éventuelle fuite dans les grandes parois de la poche placées contre elles,
   - on place la poche à plat entre les deux plaques de limitation d'expansion,
   - on connecte l'au moins un port de la poche avec la source de gaz et les moyens de mesure de pression, de manière à pouvoir envoyer le gaz sous pression dans la poche et mesurer la pression du gaz dans la poche,
- et, dans une phase de test ultérieure :
   - on envoie le gaz sous pression dans la poche, l'expansion de la poche étant limitée lorsque ses grandes parois viennent contre les plaques de limitation d'expansion,
   - puis, dans une étape ultérieure, on compare la chute de pression dans la poche grâce aux moyens de mesure de pression à un seuil prédéfini de chute de pression d'une poche considérée comme intègre.

Si la chute de pression dans la poche est inférieure au seuil, on considère que la poche a satisfait le contrôle d'intégrité, tandis que si la chute de pression dans la poche est supérieure au seuil on considère que la poche n'a pas satisfait le contrôle d'intégrité. En effet, dans ce cas, l'importance de la chute de pression trouve sa cause dans l'existence d'une ou de plusieurs fuites.

Le mode d'exécution avec plaques de limitation d'expansion présente sur le mode d'exécution sans de telles plaques, deux avantages : limiter le volume de la poche en pression et ce faisant augmenter la sensibilité du contrôle et augmenter la pression interne à la poche. Ce mode d'exécution permet en outre de tester l'intégrité de la soudure périphérique qui relie les deux parois d'une poche 2D et l'étanchéité du port.

Dans ce cas, les plaques de limitation d'expansion ont entre elles un faible écartement.

On connaît des dispositifs pour la mise en oeuvre d'un procédé de contrôle pour des filtres et des membranes, par la technique de chute de pression (mais sans plaques de limitation d'expansion), par exemple le dispositif SARTOCHECK^{®} 4 de la société SARTORIUS. On connaît des dispositifs avec plaques chez d'autres fournisseurs.

Dans ces dispositifs, les plaques de limitation d'expansion ont la caractéristique selon laquelle, en totalité ou en partie pour leur face destinée à être en contact avec une grande paroi de la poche, elles laissent passer le gaz sous pression provenant de la poche si celle-ci comporte une ou des fuites. A cet effet, et dans une réalisation, les plaques de limitation d'expansion comportent une couche poreuse ou analogue, sur laquelle viennent se plaquer les grandes parois de la poche.

Cette disposition constructive est essentielle. En effet, à défaut, les plaques occulteraient tout source de fuite contre laquelle elles seraient appliquées, ce qui conduirait à ce l'on pourrait appeler un effet « pore occulté ». Dans ce cas, la chute de pression dans la poche constatée lors du contrôle serait est inférieure au seuil préfixé, le pore formant fuite étant bouché et l'on serait amené à interpréter ce constant comme signifiant que la poche a satisfait le contrôle d'intégrité, alors que, précisément, elle comporte une (ou des) fuite(s).

La mise en oeuvre d'un test d'étanchéité sans les plaques de limitation d'expansion permettrait de s'affranchir des risques d'occultation des pores. Néanmoins, cette mise en oeuvre conduirait à une expansion continue de la poche souple et *in fine* à sa destruction.

Le procédé et le dispositif de contrôle d'intégrité avec plaques de limitation d'expansion donne satisfaction dans le cas des poches « pillow » ou « 2D » décrites ci-dessus. En revanche, ce procédé et ce dispositif ne sont pas applicables dans le cas de poches 3D, pour la raison que les petites parois du soufflet vont venir se plaquer l'une contre l'autre, à raison du faible écartement entre les plaques de limitation d'expansion et de la pression dans la poche.

L'utilisation de plaques de limitation d'expansion à grand écartement n'est pas souhaitable car elle conduirait à l'expansion et au dépliement de la poche. Il serait alors nécessaire de replier cette poche avant son conditionnement ce qui nuirait à la rapidité et la facilité de mise en oeuvre de la méthode.

Certes, l'on pourrait envisager de mettre en oeuvre d'autres procédés de contrôle d'intégrité de telles poches que le procédé par chute de pression. Mais, ce serait alors perdre les bénéfices que procure ce procédé, notamment sa rapidité, sa facilité de mise en oeuvre et sa capacité à être mis en oeuvre « on line ».

Le document US 2006/0277975 décrit un procédé de test dans lequel on applique un matériau de test sur la poche à tester et on réalise au moins un test sur la couche de matériau appliqué pour déterminer l'intégrité de la poche.

Le testeur BT-1000 de la société Rycobelgroup teste l'intégrité par la méthode de chute de pression.

Le document WO 91/16611 décrit un testeur de poche, la poche a tester étant placée entre deux plaques.

L'invention a donc pour but de pallier les problèmes précédemment identifiés.

Plus précisément, l'invention vise à pouvoir utiliser - dans le cas de poches à soufflet(s) 3D, le procédé et le dispositif de contrôle d'intégrité avec plaques de limitation d'expansion, en gardant la totalité des bénéfices qu'ils procurent, tout en évitant - ou en trouvant une solution - à l'effet « pore occulté » dans les petites parois du (ou des) soufflet(s).

A cet effet, et selon un premier aspect, l'invention propose un procédé de contrôle d'intégrité d'une poche souple non poreuse à soufflet(s) afin de détecter l'existence de fuites, dans lequel :
- dans une phase de préparation :
   - on dispose d'une poche ayant deux grandes parois en regard, au moins un soufflet latéral ayant deux petites parois en regard, et sur l'une des grandes parois au moins un port apte à être obturé ou connecté de façon étanche et amovible,
   - on dispose d'une source de gaz sous pression destiné à être introduit dans la poche via le port,
   - on dispose de moyens de mesure de la pression du gaz dans la poche via le port,
   - on dispose de deux plaques fixes de limitation d'expansion, écartées et en regard l'une de l'autre, aptes à ne pas occulter une éventuelle fuite dans les grandes parois de la poche placées contre elles,
   - on dispose d'une (ou de) plaquette(s) d'écartement déplaçable(s), aptes d'une part à être placées entre les plaques de limitation d'expansion et insérée(s) dans le (ou chaque) soufflet, d'autre part, une fois insérée(s), à ne pas occulter une éventuelle fuite dans les petites parois d'un soufflet placées contre elle,
   - on place la poche à plat entre les deux plaques de limitation d'expansion,
   - on insère entre les deux petites parois du (ou de chaque) soufflet au moins une plaquette d'écartement afin d'empêcher que ces parois ne se plaquent l'une sur l'autre,
   - on connecte l'au moins un port de la poche avec la source de gaz et les moyens de mesure de pression, de manière à pouvoir envoyer le gaz sous pression dans la poche et mesurer la pression du gaz dans la poche,
- dans une phase de test :
   - on envoie le gaz sous pression dans la poche, l'expansion de la poche étant limitée lorsque ses grandes parois viennent contre les plaques de limitation d'expansion,
   - puis, dans une étape ultérieure, on compare la chute de pression dans la poche grâce aux moyens de mesure de pression à un seuil prédéfini de chute de pression d'une poche considérée comme intègre de manière que si la chute de pression dans la poche est inférieure au seuil on considère que la poche a satisfait le contrôle d'intégrité tandis que si la chute de pression dans la poche est supérieure au seuil on considère que la poche n'a pas satisfait le contrôle d'intégrité.

Comme on le verra, les plaques de limitation d'expansion et les plaquettes d'écartement en question laissent passer le gaz sous pression provenant éventuellement de la poche souple en cas de fuite. A cet effet, les faces de ces plaques et plaquettes en contact avec la poche sont poreuses ou non lisses, tel que présentant un aspect granuleux ou analogue fonctionnellement.

Selon une réalisation, on dispose d'une (ou de) plaquette(s) d'écartement déplaçable(s) entre une position escamotée où elle(s) n'interfère(nt) pas avec la poche et une position insérée où elle(s) occupe(nt) la totalité de l'intérieur du (ou de chaque) soufflet, on dispose la (ou les) plaquette(s) dans la position écartée pour la mise en place de la poche à contrôler et on dispose la (ou les) plaquettes dans la position insérée pour la phase de contrôle.

Selon une réalisation, on déplace une plaquette d'écartement de la position escamotée à la position insérée, ou inversement, par coulissement.

Selon une réalisation :
- on dispose d'une poche ayant deux soufflets latéraux sensiblement analogues écartés et en regard l'un de l'autre, dirigés vers l'intérieur de la poche, chaque soufflet comprenant deux petites parois reliées l'une à l'autre par un pli interne et chaque petite paroi étant reliée à la grande paroi adjacente par un pli externe,
- on dispose de deux plaques de limitation d'expansion disposées sensiblement parallèlement l'une à l'autre,
- on dispose de deux (ou une série de deux) plaquettes d'écartement aptes à être placées entre les deux plaques de limitation d'expansion et insérées dans les deux soufflets.

Selon une réalisation, dans ce cas, on insère dans les deux soufflets deux (ou une série de deux) plaquettes d'écartement de manière à être sensiblement coplanaires, écartées l'une de l'autre dans leur plan commun, et disposées sensiblement parallèlement aux plaques de limitation d'expansion.

Selon une réalisation, on dispose et on maintient les plaques de limitation d'expansion avec entre elles un faible écartement, tel qu'en l'absence de plaquette d'écartement insérée dans le (ou chaque) soufflet, les petites parois du soufflet se plaqueraient au moins partiellement l'une contre l'autre, la poché étant mise en en pression.

Selon une variante de réalisation :
- on dispose d'une poche ayant un soufflet comportant plusieurs soufflets élémentaires côte à côte,
- et on dispose d'une (ou de) plaquette(s) d'écartement déplaçable(s), aptes à être placée(s) dans chacun des soufflets élémentaires.

Selon un deuxième aspect, l'invention propose un dispositif pour le contrôle d'intégrité d'une poche souple non poreuse à soufflet(s) afin de détecter l'existence de fuites, destiné à la mise en oeuvre du procédé qui vient d'être décrit, caractérisé en ce qu'il comprend :
- une source de gaz sous pression destiné à être introduit dans la poche via le port et des moyens de connexion,
- des moyens de mesure de la pression du gaz dans la poche via le port et des moyens de connexion,
- deux plaques fixes de limitation d'expansion, écartées et en regard l'une de l'autre, aptes à ne pas occulter une éventuelle fuite dans les grandes parois de la poche placées contre elles,
- une (ou des) plaquette(s) d'écartement déplaçable(s) entre une position escamotée et une position insérée, aptes d'une part à être placées entre les plaques de limitation d'expansion et insérée(s) dans le (ou chaque) soufflet de la poche à contrôler, d'autre part, une fois insérée(s), à ne pas occulter une éventuelle fuite dans les petites parois d'un soufflet placées contre elle,
- des moyens pour déplacer la (ou les) plaquette(s) de leur position escamotée à leur position insérée,
- et des moyens de comparaison de la chute de pression dans la poche grâce aux moyens de mesure de pression au seuil prédéfini.

Selon une réalisation, des moyens pour déplacer la (ou les) plaquette(s) de leur position escamotée à leur position insérée sont ou comprennent des moyens de déplacement à translation ou coulissement.

Selon une réalisation, le dispositif comporte :
- deux plaques de limitation d'expansion, disposées sensiblement parallèlement l'une à l'autre,
- et deux (ou de deux séries de) plaquettes d'écartement aptes à être placées entre les deux plaques de limitation d'expansion et insérées dans les deux soufflets.

Selon une réalisation, en position insérées, les deux (ou les deux séries de) plaquettes d'écartement sont sensiblement coplanaires, écartées l'une de l'autre dans leur plan commun, et disposées sensiblement parallèlement aux plaques de limitation d'expansion.

Selon une réalisation, les plaques de limitation d'expansion ont entre elles un faible écartement, tel qu'en l'absence de plaquette d'écartement insérée dans le (ou chaque) soufflet, les petites parois du soufflet se plaqueraient au moins partiellement l'une contre l'autre, la poché étant mise en en pression.

Selon une réalisation, le dispositif comporte une (ou des) plaquette(s) d'écartement déplaçable(s), aptes à être placée(s) dans chacun des soufflets élémentaires d'une poche ayant un soufflet comportant plusieurs soufflets élémentaires côte à côte.

Comme il a été dit, il est essentiel que les plaques de limitation d'expansion et les plaquettes d'écartement laissent passer le gaz sous pression provenant éventuellement de la poche souple en cas de fuite. A cet effet, les faces de ces plaques et plaquettes en contact avec la poche sont poreuses ou non lisses, tel que présentant un aspect granuleux ou analogue fonctionnellement.

On décrit maintenant plusieurs modes de réalisation de l'invention à l'aide des dessins dans lesquels :

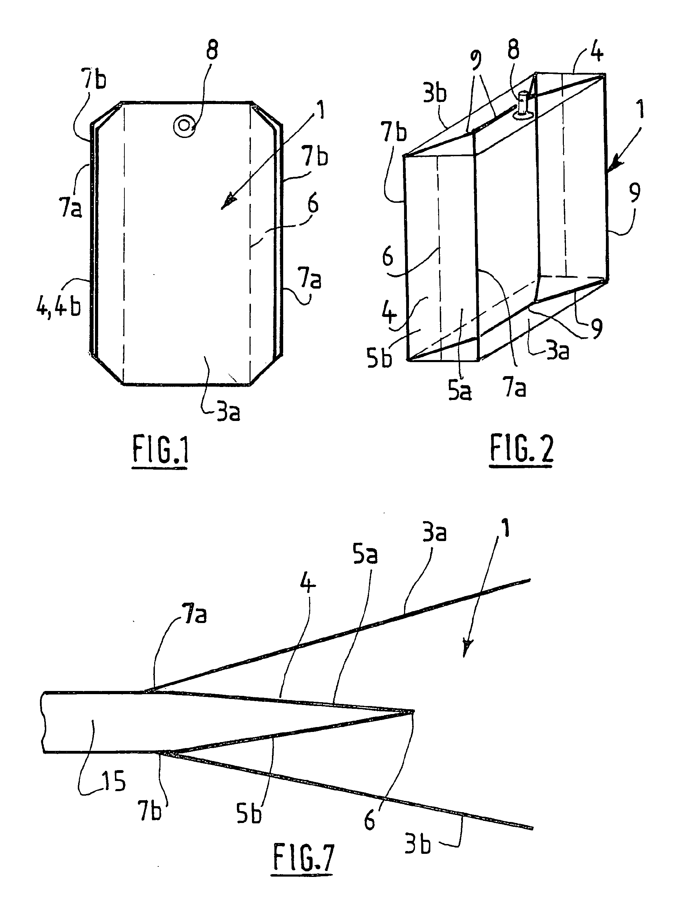

- la figure 1 est une vue en élévation d'une poche 3D à deux soufflets du type de celle dont l'intégrité doit être contrôlée, la poche étant ici à plat, les soufflets étant pliés vers l'intérieur de la poche,
- la figure 2 est une vue en perspective de la poche 3D à deux soufflets de la figure 1, la poche étant ici expansée et les soufflets dépliés,
- la figure 3 est une vue en élévation de la poche 3D à deux soufflets de la figure 1 avec les plaquettes d'écartement du dispositif de contrôle en position escamotée, avant que d'être amenées en position insérée dans les soufflets,
- la figure 4 est une vue en perspective des deux plaques fixes de limitation d'expansion du dispositif de contrôle, montrant le faible écartement entre les plaques,

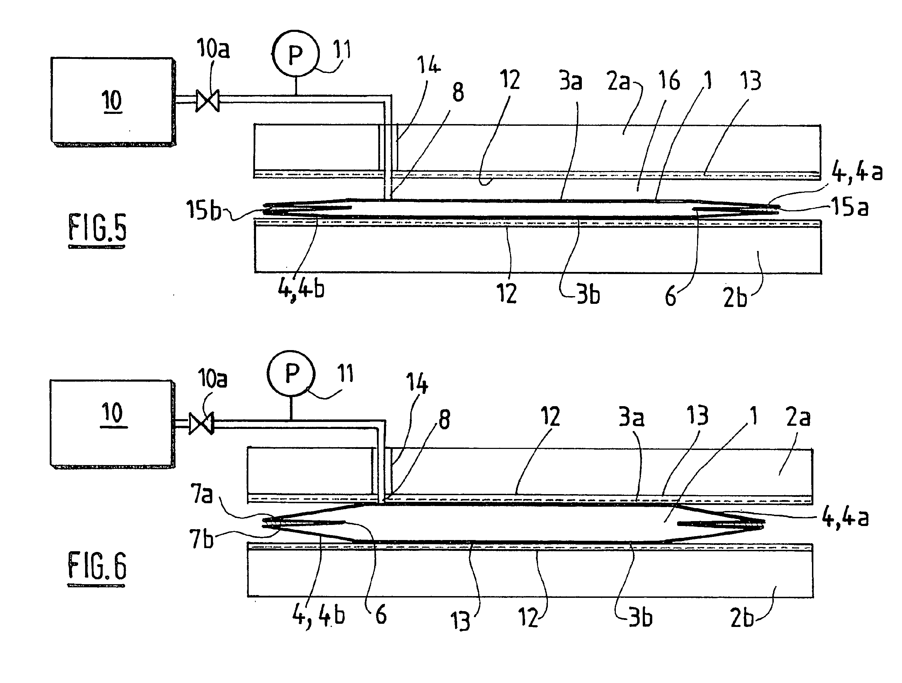

- la figure 5 est une vue en coupe transversale du dispositif de contrôle à deux plaques fixes de limitation d'expansion, dans lequel a été disposée une poche 3D à tester dans les deux soufflets de laquelle ont été insérées deux plaquettes d'écartement, la figure correspondant à la situation à la fin de la phase de préparation et avant la phase de test,
- la figure 6 est une vue en coupe transversale analogue à la figure 5, correspondant à la situation pendant la phase de test,
- la figure 7 est une vue partielle à plus grande échelle de la figure 6 montrant une plaquette d'écartement insérée dans un soufflet.

Dans l'invention, le procédé et le dispositif de contrôle d'intégrité d'une poche souple non poreuse 1, afin de détecter l'existence de fuites sont du type par chute de pression, avec plaques fixes de limitation d'expansion 2a, 2b.

Les principes de cette technique sont décrits dans la norme F 2095 - 01 de ASTM International dont le titre est « Standard Test Methods for Pressure Decay Leak Test for Nonporous Flexible Packages With and Without Restraining Plates ». Cette norme est à la portée de l'homme du métier. Elle vise à la fois le cas d'un contrôle avec plaques fixes de limitation d'expansion (restraining plates) et le cas d'un contrôle sans de telles plaques. Il est entendu que l'invention ne concerne que le cas d'un contrôle avec plaques fixes de limitation d'expansion, référencées en l'espèce 2a, 2b.

Le procédé et le dispositif de contrôle d'intégrité de l'invention sont spécialement destinés à une poche souple non poreuse 1, du type ayant deux grandes parois en regard 3a, 3b et au moins un soufflet latéral 4 ayant deux petites parois en regard 5a, 5b.

Dans la réalisation représentée sur les dessins et qui sera l'objet de la description qui suivra, la poche 1 a deux soufflets latéraux 4a, 4b, sensiblement analogues écartés et en regard l'un de l'autre, dirigés vers l'intérieur de la poche.

Chaque soufflet 4 comprend deux petites parois 5a, 5b, reliées l'une à l'autre par un pli interne 6, tandis que chaque petite paroi 5a, 5b est reliée à la grande paroi adjacente 3a, 3B, respectivement, par un pli externe 7a, 7b,

Sur l'une des grandes parois, en l'espèce la paroi 5a, il est prévu au moins un port 8 apte à être obturé ou connecté de façon étanche et amovible.

Une telle poche comporte en outre un certain nombre de lignes de soudure 9, venant de fabrication.

Les caractéristiques générales d'une telle poche à soufflets sont décrites par exemple dans le document FR -A- 2 781 202, à la portée de l'homme du métier.

Les grandes parois 3a, 3b, d'une telle poche 1, de forme générale rectangulaire à coins cassés, ont une longueur et une largeur qui dépend du volume souhaité pour la poche 1. Dans des réalisations typiques, cette longueur est comprise entre 500 et 5.000 mm et cette largeur entre 300 et 1.200 mm.

La largeur des petites parois 5a, 5b des soufflets 4a, 4b - qui correspond à la profondeur des soufflets - dépend également du volume souhaité pour la poche 1. Dans des réalisations typiques, cette largeur ou profondeur est comprise entre 50 et 600 mm.

Avec de telles dimensions, il est possible d'avoir une poche 1 dont le volume dépasse 50 I est atteint 3.000 I, ce qui justifie que la poche 1 puisse être qualifiée de poche de « grande taille ».

Bien entendu, l'invention s'applique également au cas de poches de plus petites tailles, dès lors qu'elles comportent un ou des soufflets.

En outre, il est entendu que l'invention s'applique aussi à la variante de réalisation dans laquelle un soufflet 4 n'est pas constitué d'une seule paire de petites parois 5a, 5b, mais constitué d'une pluralité de paires de petites parois telles que 5a, 5b, chaque paire de petites parois 5a, 5b constituant un soufflet élémentaire, le soufflet 4 comportant alors plusieurs soufflets élémentaires analogues côte à côte. Dans ce cas, il suffit de transposer ce qui est exposé pour le soufflet 4 à chaque soufflet élémentaire.

Le dispositif comprend une source 10 de gaz sous pression. Ce gaz est destiné à être introduit dans la poche 1 via le port 8 et des moyens de connexion appropriés. De tels moyens de connexion sont connus et à la portée de l'homme du métier.

Le dispositif comprend également des moyens 11 de mesure de la pression du gaz dans la poche 1 via le port 8 et les moyens de connexion.

Le dispositif comprend également une vanne telle que 10a, associée à la source 10 pour la mettre en communication ou non avec la poche 1.

En principe, on utilise le même port 8 pour la connexion avec la source de gaz 10 et les moyens 11 de mesure de pression. Toutefois, on ne peut exclure d'utiliser deux ports distincts.

Le dispositif comprend également les deux plaques rigides, fixes, de limitation d'expansion 2a, 2b déjà mentionnées. Ces plaques 2a, 2b sont écartées et en regard l'une de l'autre, en l'espèce disposées sensiblement parallèlement l'une à l'autre.

Les plaques de limitation d'expansion 2a, 2b ont pour caractéristique essentielle d'être aptes à ne pas occulter une éventuelle fuite dans les grandes parois 3a, 3b de la poche 1 placées contre elles.

Dans une réalisation, les plaques de limitation d'expansion 2a, 2b, sont, en totalité ou seulement en partie pour leur face 12 destinée à être en contact avec une paroi 3a, 3b, de la poche 1, agencées pour laisser passer le gaz sous pression susceptible de provenir de l'intérieur de la poche 1 du fait de l'existence d'une fuite.

Par exemple, dans une réalisation, les plaques de limitation d'expansion 2a, 2b comportent du côté de leurs faces 12 une garniture 13 présentant une porosité au gaz. Dans une autre réalisation, les plaques 2a, 2b, ne sont pas lisses et présentent un aspect granuleux ou analogue du point de vue fonctionnel.

Il est entendu que les plaques de limitation d'expansion 2a, 2b doivent présenter une rigidité leur permettant d'encaisser la pression exercée par la poche 1, une fois celle-ci gonflée. Bien entendu, il est prévu un bâti de support des plaques de limitation d'expansion 2a, 2b.

Dans le dispositif de l'invention, les deux plaques de limitation d'expansion 2a, 2b ont entre elles un faible écartement, bien que le procédé et le dispositif soient mis en oeuvre avec des poches 3D pouvant être de grande taille, comme indiqué précédemment.

On entend par faible écartement un écartement du même ordre de grandeur que celui existant aujourd'hui dans l'application à des poches 2D. Autrement dit, un tel écartement serait de nature à ce que, toutes choses égales par ailleurs, les petites parois 5a, 5b du soufflet 4 se plaqueraient au moins partiellement l'une contre l'autre, lorsque la poché 1 est mise en en pression, comme on le verra.

Par exemple, l'écartement entre les deux plaques de limitation d'expansion 2a, 2b peut être de l'ordre d'une petite dizaine de millimètres.

L'une des plaques de limitation d'expansion, par exemple la plaque 2a comporte un passage de part en part 14, situé sur la plaque 2a en un endroit approprié de manière que le port 8 prévu sur la grande paroi 5a puisse se situer en regard du passage 14. Cette disposition permet d'accéder au port 8, alors même que la poche 1 est placée entre les deux plaques de limitation d'expansion 2a, 2b.

Le cas échéant, il est prévu sur les deux plaques de limitation d'expansion 2a, 2b des repères facilitant le positionnement correct des poches 1.

Le dispositif comprend également, en l'espèce, deux plaquettes d'écartement 15a, 15b.

Ces plaquettes d'écartement 15a, 15b sont agencées de manière déplaçable entre une position escamotée et une position insérée sur lesquelles on reviendra.

A cet effet, le dispositif comporte des moyens pour déplacer les deux plaquettes d'écartement 15a, 15b, de leur position escamotée à leur position insérée, et inversement.

Dans une réalisation, les moyens pour déplacer les deux plaquettes d'écartement 15a, 15b, de leur position escamotée à leur position insérée sont ou comprennent des moyens de déplacement à translation ou à coulissement.

Il est entendu toutefois que d'autres formes de moyens de déplacement peuvent être envisagés.

Dans une réalisation possible, au lieu de deux plaquettes d'écartement 15a, 15b, monoblocs, on prévoit deux séries de plaquettes bout à bout et formant une continuité.

Les plaquettes d'écartement 15a, 15b sont agencées pour être aptes en premier lieu à être placées dans l'espace 16 existant entre les plaques de limitation d'expansion 2a, 2b.

Elles sont aptes également à être insérées dans les deux soufflets 4a, 4b de la poche 1 à contrôler. On entend par « insérées », le fait que les plaquettes occupent la totalité de l'espace du soufflet 4a, 4b, ou du moins recouvrent la totalité des petites parois 5a, 5b constitutives du soufflet 4a, 4b. A cet effet et le cas échéant, les plaquettes d'écartement 15a, 15b présentent, en section transversale, une forme en V très fermé, comportant une partie distale venant se placer contre le pli interne 6.

Compte tenu du faible écartement entre les deux plaques de limitation d'expansion 2a, 2b, précédemment mentionné, les plaquettes d'écartement 15a, 15b sont suffisamment minces, voire très minces.

Bien entendu, les plaquettes 15a, 15b doivent présenter une certaine rigidité. Toutefois, la question de leur rigidité ne se pose pas dans les mêmes termes que pour les plaques de limitation d'expansion 2a, 2b. En effet, une même plaquette d'écartement 15a, 15b est destinée à subir les pressions antagonistes exercées de part et d'autre par les parois 5a, 5b opposées. Pour cette raison, la minceur des plaquettes d'écartement 15a, 15b n'est pas rédhibitoire.

Les plaquettes d'écartement 15a, 15b sont agencées pour être aptes en second lieu, et une fois insérées dans les deux soufflets, à ne pas occulter une éventuelle fuite dans les petites parois 5a, 5b placées contre elle, cette caractéristique étant essentielle.

A cet effet, et à l'instar des plaques de limitation d'expansion 2a, 2b, les plaquettes d'écartement 15a, 15b comportent sur leurs deux faces une garniture présentant une porosité au gaz, ou sont entièrement constitué d'un matériau poreux. Dans une autre réalisation, les plaquettes 1 a, 15b ne sont pas lisses et présentent un aspect granuleux ou analogue du point de vue fonctionnel.

Le dispositif comprend également des moyens de comparaison de la chute de pression dans la poche 1 une fois gonflée, mesurée grâce aux moyens 11 de mesure de pression, à un seuil prédéfini, comme il sera expliqué par la suite.

En position insérées, les deux plaquettes d'écartement 15a, 15b sont sensiblement coplanaires, écartées l'une de l'autre dans leur plan commun, et disposées sensiblement parallèlement aux plaques de limitation d'expansion 2a, 2b.

Dans la variante ou un soufflet 4 est constitué de plusieurs soufflets élémentaires côte à côte, on prévoit une plaquette d'écartement (ou une série de plaquettes d'écartement) dans chacun des soufflets élémentaires.

Le procédé de mise en oeuvre du dispositif de contrôle de la poche 1, qui vient d'être décrit, comporte une phase de préparation suivie d'une phase de test.

Dans la phase de préparation, on dispose d'une poche 1 telle que décrite et d'un dispositif de contrôle tel que décrit.

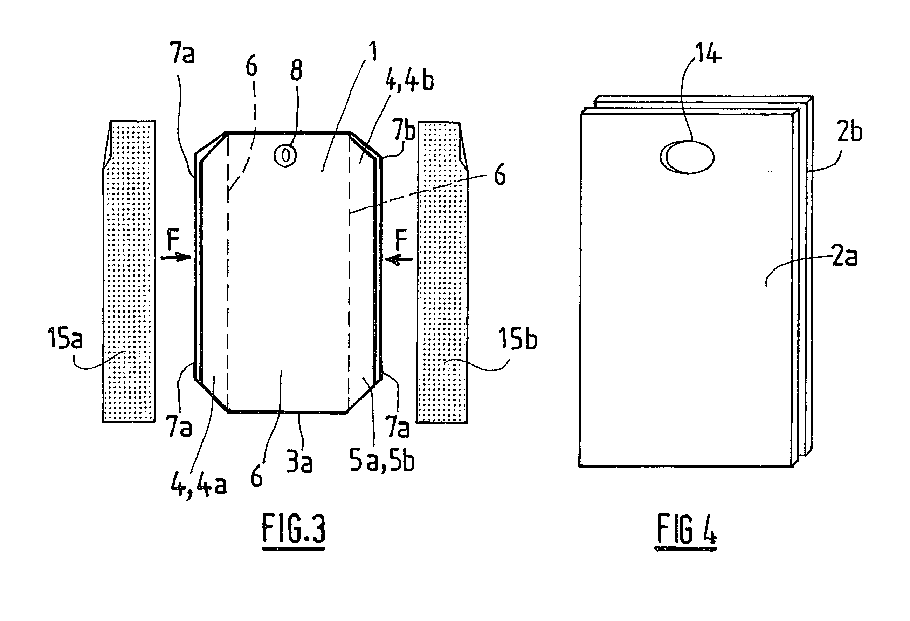

Puis, on place la poche 1 à plat, les soufflets 4 étant fermés sur eux-mêmes, entre les deux plaques de limitation d'expansion 2a, 2b. D'autre part, on insère entre les deux petites parois 5a, 5b de chaque soufflet 4, une plaquette d'écartement 15a, 15b (flèches F, figure3), lesquelles ont pour fonction d'empêcher que ces parois 5a, 5b, ne se plaquent l'une sur l'autre du fait de la pression qui va être mise dans la poche1, La séquence dans laquelle ces opérations ont réalisées peut faire l'objet de différentes réalisations, De même en ce qui concerne le déplacement des plaquette d'écartement 15a, 15b de leur position escamotée à la position insérée, comme exposé plus haut.

Ainsi qu'il résulte de la description qui précède, on insère dans les deux soufflets 4a, 4b, les deux plaquettes d'écartement 15a, 15b, de manière à être sensiblement coplanaires, écartées l'une de l'autre dans leur plan commun, et disposées sensiblement parallèlement aux plaques de limitation d'expansion 2a, 2b, dans l'espace 16.

On connecte le port 8 de la poche 1 avec la source 10 de gaz et les moyens 11 de mesure de pression, ce qui est rendu possible du fait que le port est en regard du passage 14. Grâce à cette connexion, il sera ensuite possible de pouvoir envoyer le gaz sous pression dans la poche 1 et mesurer la pression du gaz dans la poche 1,

Dans la phase de test, on envoie le gaz sous pression depuis la source 10 jusque dans la poche 1. L'expansion de la poche 1 est limitée, ses grandes parois 3a, 3b, venant contre les plaques de limitation d'expansion 2a, 2b, plus précisément les garnitures 13,

Comme on le sait, il est généralement nécessaire d'attendre la fin d'une période de stabilisation avant que de procéder au test lui-même.

Puis, dans une étape ultérieure, on compare la chute de pression dans la poche grâce aux moyens de mesure de pression à un seuil prédéfini de chute de pression.

Ce seuil est la valeur de la chute de pression d'une poche subissant le contrôle et que l'on considère comme intègre.

On peut alors interpréter les résultats du contrôle :
- si la chute de pression dans la poche 1 est inférieure au seuil, on considère que la poche 1 a satisfait le contrôle d'intégrité,
- si, au contraire, la chute de pression dans la poche 1 est supérieure au seuil on considère que la poche n'a pas satisfait le contrôle d'intégrité.

Dans la réalisation dans laquelle on dispose d'une poche ayant un soufflet comportant plusieurs soufflets élémentaires côte à côte, on insère les plaquettes d'écartement dans chacun des soufflets élémentaires.

## Revendications

1. Procédé de contrôle d'intégrité d'une poche souple non poreuse à soufflet(s) afin de détecter l'existence de fuites, dans lequel :
- dans une phase de préparation :
- on dispose d'une poche ayant deux grandes parois en regard, au moins un soufflet latéral ayant deux petites parois en regard, et sur l'une des grandes parois au moins un port apte à être obturé ou connecté de façon étanche et amovible,
- on dispose d'une source de gaz sous pression destiné à être introduit dans la poche via le port,
- on dispose de moyens de mesure de la pression du gaz dans la poche via le port,
- on dispose de deux plaques fixes de limitation d'expansion, écartées et en regard l'une de l'autre, aptes à ne pas occulter une éventuelle fuite dans les grandes parois de la poche placées contre elles,
- on dispose d'une (ou de) plaquette(s) d'écartement déplaçable(s), aptes d'une part à être placées entre les plaques de limitation d'expansion et insérée(s) dans le (ou chaque) soufflet, d'autre part, une fois insérée(s), à ne pas occulter une éventuelle fuite dans les petites parois d'un soufflet placées contre elle,
- on place la poche à plat entre les deux plaques de limitation d'expansion,
- on insère entre les deux petites parois du (ou de chaque) soufflet au moins une plaquette d'écartement afin d'empêcher que ces parois ne se plaquent l'une sur l'autre,
- on connecte l'au moins un port de la poche avec la source de gaz et les moyens de mesure de pression, de manière à pouvoir envoyer le gaz sous pression dans la poche et mesurer la pression du gaz dans la poche,
- dans une phase de test :
- on envoie le gaz sous pression dans la poche, l'expansion de la poche étant limitée lorsque ses grandes parois viennent contre les plaques de limitation d'expansion,
- puis, dans une étape ultérieure, on compare la chute de pression dans la poche grâce aux moyens de mesure de pression à un seuil prédéfini de chute de pression d'une poche considérée comme intègre de manière que si la chute de pression dans la poche est inférieure au seuil on considère que la poche a satisfait le contrôle d'intégrité tandis que si la chute de pression dans la poche est supérieure au seuil on considère que la poche n'a pas satisfait le contrôle d'intégrité.

2. Procédé selon la revendication 1, **caractérisé en ce que** l'on dispose d'une (ou de) plaquette(s) d'écartement déplaçable(s) entre une position escamotée où elle(s) n'interfère(nt) pas avec la poche et une position insérée où elle(s) occupe(nt) la totalité de l'intérieur du (ou de chaque) soufflet, on dispose la (ou les) plaquette(s) dans la position écartée pour la mise en place de la poche à contrôler et on dispose la (ou les) plaquettes dans la position insérée pour la phase de contrôle.

3. Procédé selon la revendication 2, **caractérisé en ce que** l'on déplace une plaquette d'écartement de la position escamotée à la position insérée, ou inversement, par coulissement.

4. Procédé selon l'une quelconque des revendications 1 à 3, **caractérisé en ce que** :
- on dispose d'une poche ayant deux soufflets latéraux sensiblement analogues écartés et en regard l'un de l'autre, dirigés vers l'intérieur de la poche, chaque soufflet comprenant deux petites parois reliées l'une à l'autre par un pli interne et chaque petite paroi étant reliée à la grande paroi adjacente par un pli externe,
- on dispose de deux plaques de limitation d'expansion disposées sensiblement parallèlement l'une à l'autre,
- on dispose de deux (ou de deux séries de) plaquettes d'écartement aptes à être placées entre les deux plaques de limitation d'expansion et insérées dans les deux soufflets.

5. Procédé selon la revendication 4, **caractérisé en ce que** l'on insère dans les deux soufflets deux (ou deux séries de) plaquettes d'écartement de manière à être sensiblement coplanaires, écartées l'une de l'autre dans leur plan commun, et disposées sensiblement parallèlement aux plaques de limitation d'expansion.

6. Procédé selon l'une quelconque des revendications 1 à 5, **caractérisé en ce que** l'on dispose et l'on maintien les plaques de limitation d'expansion avec entre elles un faible écartement, tel qu'en l'absence de plaquette d'écartement insérée dans le (ou chaque) soufflet, les petites parois du soufflet se plaqueraient au moins partiellement l'une contre l'autre, la poché étant mise en en pression.

7. Procédé selon l'une quelconque des revendications 1 à 6, **caractérisé en ce** :
- on dispose d'une poche ayant un soufflet comportant plusieurs soufflets élémentaires côte à côte,
- on dispose d'une (ou de) plaquette(s) d'écartement déplaçable(s), aptes à être placée(s) dans chacun des soufflets élémentaires.

8. Dispositif pour le contrôle d'intégrité d'une poche souple non poreuse à soufflet(s) afin de détecter l'existence de fuites, destiné à la mise en oeuvre du procédé selon l'une quelconque des revendications 1 à 7, **caractérisé en ce qu'**il comprend :
- une source de gaz sous pression destiné à être introduit dans la poche via le port et des moyens de connexion,
- des moyens de mesure de la pression du gaz dans la poche via le port et des moyens de connexion,
- deux plaques fixes de limitation d'expansion, écartées et en regard l'une de l'autre, aptes à ne pas occulter une éventuelle fuite dans les grandes parois de la poche placées contre elles,
- une (ou des) plaquette(s) d'écartement déplaçable(s) entre une position escamotée et une position insérée, aptes d'une part à être placées entre les plaques de limitation d'expansion et insérée(s) dans le (ou chaque) soufflet de la poche à contrôler, d'autre part, une fois insérée(s), à ne pas occulter une éventuelle fuite dans les petites parois d'un soufflet placées contre elle,
- des moyens pour déplacer la (ou les) plaquette(s) de leur position escamotée à leur position insérée,
- et des moyens de comparaison de la chute de pression dans la poche grâce aux moyens de mesure de pression au seuil prédéfini.

9. Dispositif selon la revendication 8, **caractérisé en ce que** des moyens pour déplacer la (ou les) plaquette(s) de leur position escamotée à leur position insérée sont ou comprennent des de déplacement coulissement.

10. Dispositif selon l'une quelconque des revendications 8 et 9, **caractérisé en ce qu'**il comporte :
- deux plaques de limitation d'expansion, disposées sensiblement parallèlement l'une à l'autre,
- deux (ou de deux séries de) plaquettes d'écartement aptes à être placées entre les deux plaques de limitation d'expansion et insérées dans les deux soufflets.

11. Dispositif selon la revendication 10, **caractérisé en ce qu'**en position insérées, les deux (ou les deux séries de) plaquettes d'écartement sont sensiblement coplanaires, écartées l'une de l'autre dans leur plan commun, et disposées sensiblement parallèlement aux plaques de limitation d'expansion.

12. Dispositif selon l'une quelconque des revendications 8 à 11, **caractérisé en ce que** les plaques de limitation d'expansion ont entre elles un faible écartement, tel qu'en l'absence de plaquette d'écartement insérée dans le (ou chaque) soufflet, les petites parois du soufflet se plaqueraient au moins partiellement l'une contre l'autre, la poché étant mise en en pression.

13. Dispositif selon l'une quelconque des revendications 8 à 12, **caractérisé en ce qu'**il comporte une (ou des) plaquette(s) d'écartement déplaçable(s), aptes à être placée(s) dans chacun des soufflets élémentaires d'une poche ayant un soufflet comportant plusieurs soufflets élémentaires côte à côte.

14. Dispositif selon l'une quelconque des revendications 8 à 13, **caractérisé par** des plaques de limitation d'expansion et/ou des plaquettes d'écartement qui, en totalité ou en partie pour leur face destinée à être en contact avec une paroi de la poche, laissent passer le gaz sous pression, notamment en présentant une porosité au gaz ou en n'étant pas lisses et présentant un aspect granuleux ou analogue du point de vue fonctionnel.

## Claims

1. A method for checking the integrity of a flexible non porous bag having bellows so as to detect the existence of leakages, wherein:
- during a preparation phase:
- a bag is provided with two opposite larger walls, at least one side bellows having two opposite smaller walls, and on one of the larger walls, at least one port able to be sealingly and removably closed or connected,
- a source of pressurized gas is provided and intended to be introduced into the bag, through the port,
- gas pressure measuring means is provided in the bag, via the port,
- two fixed expansion limiting plates are provided, spaced from and opposite each other, able not to stop a possible leakage in the larger walls of the bag positioned against these,
- one (or several) movable spacing small plate(s) is/are provided and able, on the one hand, to be positioned between the expansion limiting plates and inserted into the (or each) bellows, and on the other hand, once it/they is/are inserted, not to stop a possible leakage in the smaller walls of a bellows positioned therebetween,
- the bag is placed flat between the two spacing small plates,
- at least one spacing small plate is inserted between the two smaller walls of the (or each) bellows,
- at least one port of the bag is connected to the gas source and the pressure measuring means, so that pressurized gas can be sent to the bag and the pressure of gas in the bag can be measured,
- during a testing phase:
- pressurized gas is sent into the bag, with the expansion of the bag being limited when the larger walls thereof stick to the expansion limiting plates,
- then, in a subsequent step, the pressure drop inside the bag is compared, using the pressure measuring means, with a predefined threshold for pressure drop of a bag considered as sound, whereas if the pressure drop in the bag is above the threshold, it is considered that the bag has failed the integrity test.

2. A method according to claim 1, **characterised in that** one (or several) spacing small plate(s) is/are provided movable between a hidden position where it(they) does not/do not interfere with the bag and an inserted position where it/they fill(s) the whole of the inside of the (or each) bellows, the plate(s) is/are positioned in the spaced position for positioning the bag to be checked and the plate(s) is positioned in the inserted position for the inspection phase.

3. A method according to claim 2, **characterised in that** a spacing small plate is moved from the hidden position to the inserted position, or reversely, by sliding.

4. A method according to any one of claims 1 to 3, **characterised in that**:
- a bag is provided having two substantially analog side bellows spaced from and opposite each other, oriented towards the inside of the bag, with each bellows including two small walls connected together by an internal fold and each small wall being connected to the contiguous large wall by an external fold,
- two expansion limiting plates are provided and positioned substantially parallel together,
- two (or two series) of spacing small plates are provided and able to be positioned between the two expansion limiting plates and inserted into the two bellows.

5. A method according to claim 4, **characterised in that** two (or two series of) spacing small plates are inserted into both bellows so as to be substantially in the same plane, spaced from each other in their common plane, and positioned substantially parallel to the expansion limiting plates.

6. A method according to any one of claims 1 to 5, **characterised in that** the expansion limiting plates are positioned and held with a small spacing between these, so that if no spacing small plate were inserted into the (or each) bellows, the smaller walls of the bellows would at least partially stick to each other, with the bag being pressurized.

7. A method according to any one of claims 1 to 6, **characterised in that**:
- a bag is provided with a bellows including several elementary bellows positioned side by side,
- one (or several) movable spacing small plate(s) is/are provided and able to be moved in each one of the elementary bellows.

8. A device specifically suitable for the checking of integrity of a flexible non porous bag having a bellows so as to detect the existence of a leakage, intended to implement the method according to any one of claims 1 to 7, **characterized in that** it includes,
- a source of pressurized gas intended to be introduced into the bag via the port and connection means,
- means for measuring the gas pressure in the bag via the port and connection means,
- two fixed expansion limiting plates, spaced from and opposite each other, able not to stop a possible leakage in the larger walls of the bag positioned against these,
- one (or several) spacing small plate(s) movable between a hidden position and an inserted position, able, on the one hand, to be positioned between the expansion limiting plates and inserted into the (or each) bellows of the bag to be checked, on the other hand, once inserted, not to stop a possible leakage in the smaller walls of a bellows positioned against these,
- means for moving the small plate(s) from its/their hidden position(s) to its/their inserted position(s),
- and means for comparing the pressure drop in the bag using the pressure measuring means at the predetermined threshold.

9. A device according to claim 8, **characterized in that** means for moving the small plate(s) from their hidden position(s) to their inserted position(s) is/are or include(s) translational or sliding motion means.

10. A device according to claims 8 and 9, **characterised in that** it includes:
- two expansion limiting plates, positioned substantially parallel,
- two (or two series of) spacing small plates, able to be placed between the two expansion limiting plates and inserted into both bellows.

11. A device according to claim 10, **characterised in that**, in the inserted positions, both (or both series of) spacing small plates, are substantially on the same plane, and spaced from one another in their common plane, and positioned substantially parallel to the expansion limiting plates.

12. A device according to any one of claims 8 to 11, **characterised in that** the expansion limiting plates are separated by a short distance, so that if no spacing small plate were inserted into the (or each) bellows, the smaller walls of the bellows would at least partially stick to each other, with the bag being pressurized.

13. A device according to any one of claims 8 to 12, **characterized in that** it includes one (or more) movable spacing small plate(s), able to be positioned in each one of the elementary bellows of a bag having bellows including several elementary bellows placed side by side.

14. A device according to any one of claims 8 to 13, **characterized in that** expansion limiting plates and/or spacing small plates, which, as for their face intended to contact a wall of the bag, totally or partially let pressurized gas through, more particularly by being permeable to gas, or not being smooth and having a seedy appearance or similar, from a functional point of view.

## Patentansprüche

1. Kontrollverfahren der Integrität eines elastischen, nicht porösen Beutels mit Faltenbalg (Faltenbälgen), um das Vorhandensein von Lecks festzustellen, bei dem:
- in einer Vorbereitungsphase:
- man über einen Beutel mit zwei großen, gegenüberliegenden Wänden, wenigstens einem lateralen Faltenbalg mit zwei kleinen gegenüberliegenden Wänden und auf einer der großen Wände wenigstens einer Öffnung verfügt, die geeignet ist, dicht oder abnehmbar verschlossen oder angeschlossen zu werden,
- man über eine unter Druck stehende Gasquelle verfügt, die dazu bestimmt ist, über die Öffnung in den Beutel eingeführt zu werden,
- man über die Öffnung über Mittel zur Druckmessung des Gases in dem Beutel verfügt,
- man über zwei beabstandete und einander gegenüberliegende feste Platten zur Ausdehnungsbegrenzung verfügt, die geeignet sind, ein eventuelles Leck in den großen Wänden des gegen sie platzierten Beutels zu verschleiern,
- man über eine oder mehrere Beabstandungsplakette(n) verfügt, die geeignet sind, einerseits zwischen die Platten zur Ausdehnungsbegrenzung platziert und andererseits in den (oder jeden) Faltenbalg eingefügt zu werden und nach dem Einfügen ein eventuelles Lecks in den kleinen Wänden eines Faltenbalges, der gegen sie platziert wird, nicht zu verschleiern,
- man den Beutel flach zwischen den zwei Platten zur Ausdehnungsbegrenzung platziert,
- man zwischen den zwei kleinen Wänden des (oder jedes) Faltenbalges wenigstens eine Beabstandungsplakette einfügt, um zu verhindern, dass diese Wände nicht gegeneinander gedrückt werden,
- man wenigstens eine Öffnung des Beutels mit der Gasquelle und den Mitteln zur Druckmessung derart anschießt, dass das unter Druck stehende Gas in den Beutel geschickt werden und der Druck des Gases im Beutel gemessen werden kann,
- in einer Testphase:
- man das unter Druck stehende Gas in den Beutel schickt, wobei die Ausdehnung des Beutels begrenzt ist, wenn seine großen Wände gegen die Platten zur Ausdehnungsbegrenzung zum Aufliegen kommen,
- dann, in einer späteren Stufe, man den Druckabfall im Beutel anhand der Mittel zur Druckmessung auf einen vordefinierten Schwellenwert des Druckabfalls eines Beutels, der als unversehrt gilt, derart vergleicht, dass, wenn der Druckabfall im Beutel unter dem Schwellenwert liegt, davon ausgegangen wird, dass der Beutel die Integritätskontrolle bestanden hat, während davon ausgegangen wird, dass der Beutel die Integritätskontrolle nicht bestanden hat, wenn der Druckabfall im Beutel höher ist als der Schwellenwert.

2. Verfahren gemäß Anspruch 1, **dadurch gekennzeichnet, dass** man über eine (oder mehrere) Beabstandungsplakette(n) verfügt, die zwischen einer eingefahrenen Position, in der sie nicht mit dem Beutel interferiert / interferieren, und einer eingefügten Position, in der sie den gesamten Innenbereich des (oder jedes) Faltenbalges belegt / belegen, verschiebbar sind, die Plakette(n) in für die Einsetzung des zu kontrollierenden Beutels der beabstandete Position angeordnet wird (oder werden) und man die Plakette(n) in der für die Kontrollphase eingefügten Position anordnet.

3. Verfahren gemäß Anspruch 2, **dadurch gekennzeichnet, dass** man eine Beabstandungsplakette durch Gleiten von der eingefahrenen Position in die eingefügte Position oder umgekehrt verschiebt.

4. Verfahren gemäß Anspruch 1 bis 3, **dadurch gekennzeichnet, dass**:
- man über einen Beutel verfügt, der zwei laterale, deutlich analoge, beabstandete und voneinander gegenüberliegende Faltenbälge hat, die zur Innenseite des Beutels gerichtet sind, wobei jeder Faltenbalg zwei kleine Wände umfasst, die miteinander durch eine interne Falte verbunden sind, und jede kleine Wand durch eine externe Falte mit der anliegenden großen Wand verbunden ist,
- man über zwei Platten zur Ausdehnungsbegrenzung verfügt, die deutlich parallel zueinander angeordnet sind,
- man über zwei (oder zwei Serien von) Beabstandungsplaketten verfügt, die geeignet sind, zwischen den zwei Platten zur Ausdehnungsbegrenzung platziert und in die zwei Faltenbälge eingefügt zu werden.

5. Verfahren gemäß Anspruch 4, **dadurch gekennzeichnet, dass** man in die zwei Faltenbälge zwei (oder zwei Serien von) Beabstandungsplaketten derart einfügt, das sie deutlich koplanar, voneinander in ihrer gemeinsamen Ebene beabstandet und deutlich parallel zu den Platten zur Ausdehnungsbegrenzung angeordnet sind.

6. Verfahren gemäß Anspruch 1 bis 5, **dadurch gekennzeichnet, dass** man über die Platten zur Ausdehnungsbegrenzung verfügt und sie mit einer geringen Beabstandung untereinander derart festhält, dass bei Fehlen einer in den (oder jeden) Faltenbalg eingefügten Beabstandungsplakette die kleinen Wände des Faltenbalges sich wenigstens teilweise gegeneinander drücken würden, wobei der Beutel unter Druck gesetzt wird.

7. Verfahren gemäß Anspruch 1 bis 6, **dadurch gekennzeichnet, dass**:
- man über einen Beutel mit einem Faltenbalg verfügt, der mehrere elementare Faltenbälge Seite an Seite hat,
- man über eine (oder mehrere) verschiebbare Beabstandungsplakette(n) verfügt, die geeignet ist /sind, in jeden elementaren Faltenbalg platziert zu werden.

8. Vorrichtung für die Integritätskontrolle eines elastischen, nicht porösen Beutels mit Faltenbalg /Faltenbälgen, um das Vorhandensein von Lecks festzustellen, die zur Umsetzung des Verfahrens gemäß Anspruch 1 bis 7 bestimmt ist, **dadurch gekennzeichnet, dass** es umfasst:
- eine unter Druck stehende Gasquelle, die zum Einführen in den Beutel über die Öffnung bestimmt ist, und Anschlussmittel,
- Mittel zur Druckmessung des Gases im Beutel über die Öffnung und Anschlussmittel,
- zwei voneinander beabstandete und einander gegenüberliegende feste Platten zur Ausdehnungsbegrenzung, die geeignet sind, ein eventuelles Leck in den großen Wänden des Beutels zu verschleiern, die gegeneinander platziert sind,
- eine (oder mehrere) Beabstandungsplakette(n), die zwischen einer eingefahrenen und einer eingefügten Position verschiebbar und geeignet sind, einerseits zwischen den Platten zur Ausdehnungsbegrenzung platziert zu werden und andererseits in den (oder jeden) Faltenbalg des zu kontrollierenden Beutels eingefügt zu werden und nach dem Einfügen ein eventuelles Leck in den kleinen Wänden eines Faltenbalges, die gegen ihn platziert sind, nicht zu verschleiern,
- Mittel zum Verschieben der Plakette(n) von ihrer eingefahrenen Position in ihre eingefügte Position,
- und Vergleichsmittel des Druckabfalls im Beutel dank der Mittel zur Druckmessung zum vorbestimmten Schwellenwert.

9. Vorrichtung gemäß Anspruch 8, **dadurch gekennzeichnet, dass** Mittel zum Verschieben der Plakette(n) von ihrer eingefahrenen Position in ihre eingefügte Position zum Verschieben / Gleiten sind oder umfassen.

10. Vorrichtung gemäß Anspruch 8 und 9, **dadurch gekennzeichnet, dass** es umfasst:
- zwei Platten zur Ausdehnungsbegrenzung, die deutlich parallel voneinander angeordnet sind,
- zwei (oder zwei Serien von) Beabstandungsplaketten, die geeignet sind, zwischen den zwei Platten zur Ausdehnungsbegrenzung platziert und in die zwei Faltenbälge eingefügt zu werden.

11. Vorrichtung gemäß Anspruch 10, **dadurch gekennzeichnet, dass** die zwei (oder die zwei Serien von) Beabstandungsplaketten in eingefügter Position deutlich koplanar, 1 voneinander in ihrer gemeinsamen Ebene beabstandet und deutlich parallel zu den Platten zur Ausdehnungsbegrenzung angeordnet sind.

12. Vorrichtung gemäß Anspruch 8 bis 11, **dadurch gekennzeichnet**, 1 dass die Platten zur Ausdehnungsbegrenzung untereinander eine geringe Beabstandung derart haben, dass sich bei Fehlen einer in den (oder jeden) Faltenbalg eingefügten Beabstandungsplakette die kleinen Wände des Faltenbalges wenigstens teilweise gegeneinander drücken würden, wobei der Beutel unter Druck gesetzt werden würde.

13. Vorrichtung gemäß Anspruch 8 bis 12, **dadurch gekennzeichnet, dass** sie eine (oder mehrere) verschiebbare Beabstandungsplakette(n) umfasst, die geeignet sind, in jedem der elementaren Faltenbälge eines Beutels mit einem Faltenbalg platziert zu werden, der mehrere elementare Faltenbälge Seite an Seite hat.

14. Vorrichtung gemäß Anspruch 8 bis 13, **gekennzeichnet durch** Platten zur Ausdehnungsbegrenzung und /oder Beabstandungsplaketten, die ganz oder teilweise mit ihrer Seite, die dazu bestimmt ist, mit einer Wand des Beutels in Kontakt zu kommen, das unter Druck stehende Gas durchtreten lassen, indem sie insbesondere eine Porosität gegenüber Gas aufweisen oder nicht glatt sind und einen körnigen oder im funktionalen Hinblick analogen Aspekt aufweisen.
